# EUROPÄISCHE PATENTSCHRIFT

(11) **EP 2 063 156 B1**
(45) Veröffentlichungstag und Bekanntmachung des Hinweises auf die Patenterteilung: **13.02.2013**
(21) Anmeldenummer: 08019679.3
(22) Anmeldetag: 11.11.2008
(51) Int. Cl.: F16J 15/34

(54) **Doppel-Dichtungsanordnung**
Double seal arrangement
Arrangement d'étanchéité double

(30) Priorität: 23.11.2007 DE 202007016407 U; 23.11.2007 DE 202007016406 U; 11.03.2008 DE 202008003418 U
(43) Veröffentlichungstag der Anmeldung: 27.05.2009
(73) Patentinhaber: EagleBurgmann Germany GmbH & Co. KG, 82515 Wolfratshausen (DE)
(72) Erfinder: Dröscher, Peter, 82538 Geretsried-Gelting (DE); Sattler, Michael, 82031 Grünwald (DE); Harmelink, Gerard, 7411 EJ Deventer (NL); Lederer, Günther, 82538 Geretsried (DE)
(74) Vertreter: Schaeberle, Steffen

(56) Entgegenhaltungen:
- EP-A- 1 253 359
- DE-C1- 4 225 642
- GB-A- 2 045 875
- US-A- 6 076 830
- US-A1- 2005 242 515
- US-B1- 6 293 555

## Beschreibung

Die Erfindung betrifft eine Doppel-Dichtungsanordnung mit einer ersten und zweiten Gleitringdichtungsanordnung und insbesondere mit einer Gleitringdichtungsanordnung mit wenigstens einem Paar zusammenwirkender Gleitringe, von denen einer axial beweglich und mit einer Vorspannkraft gegen den betreffenden anderen Gleitring axial vorgespannt ist, und mit einer Nebendichtungsanordnung zur Abdichtung des axial beweglichen Gleitringes gegenüber wenigstens einer die Bewegung des Gleitringes und eines Vorspannkraftübertragungsringes führenden Führungsumfangsfläche eines Führungsbauteiles. Eine derartige Gleitringdichtungsanordnung ist z.B. aus der US 3 479 039 A bekannt.

Bei der bekannten Gleitringdichtungsanordnung erfolgt die Abdichtung des Gleiringes gegenüber einem Gehäuse durch O-Ringe, die in Nuten im Gleitring aufgenommen sind. Bekannt ist es auch (WO 2006/040865), einen oder mehrere O-Ringe zwischen einem Gehäuse und dem Umfang des Gleitringes in axialendig offenen Aussparungen im Gleitring bzw. Gehäuse vorzusehen. In jedem Fall beruht die Dichtwirkung der O-Ringe auf einem vorzusehenden Übermaß in Bezug auf den Spalt, den es abzudichten gilt, so dass eine axiale Bewegung des Gleitringes gegen hohe Reibwiderstände vonstatten geht und dadurch die für die Funktion des Gleitringes wichtige Beweglichkeit entsprechend eingeschränkt ist.

Doppel-Dichtungsanordnungen werden beispielsweise zur Abdichtung von Gas-Kompressoren verwendet. Hierbei ist eine erste Gleitringdichtungsanordnung und eine zweite Gleitringdichtungsanordnung in Axialrichtung nacheinander an einer Welle angeordnet. Die zweite, der ersten Gleitringdichtungsanordnung nachgeschaltete Gleitringdichtungsanordnung ist meist baugleich und dient insbesondere zur Sicherheit bei einem Versagen der ersten Gleitringdichtungsanordnung. Diese Doppel-Dichtungsanordnung ist von einem Wellenlager ferner durch eine dritte Dichtung, wie z.B. eine Schwimmringdichtung, getrennt. Diese dritte Dichtung ist in Axialrichtung nach der Doppel-Dichtungsanordnung angeordnet und dient somit als Lageröl-Abdichtung zum Bereich der zweiten Gleitringdichtungsanordnung. Somit ergibt sich eine große axiale Baulänge der Dichtungen an der Welle. Insbesondere bei Gas-Kompressoren ist eine möglichst kurze axiale Baulänge jedoch sehr wichtig.

Die EP 1 253 359 A2 zeigt eine Doppel-Dichtungsanordnung gemäß dem Oberbegriff des Anspruchs 1.

Ferner ist aus der GB 2 045 875 A eine einfache Gleitringdichtung bekannt, welche ein Paar von O-Ringen und einen Kraftübertragungsring zeigt, welche an einer rückwärtigen Seite eines Gleitrings abdichten. Eine Feder übt dabei eine axiale Kraft auf den Kraftübertragungsring aus, um eine Abdichtung an Führungsumfangsflächen der O-Ringe zu ermöglichen.

Der Erfindung liegt die Aufgabe zugrunde, eine Doppel-Dichtungsanordnung zu schaffen, die eine verkürzte axiale Baulänge aufweist und die eine Gleitringdichtungsanordnung umfasst, bei der die axiale Beweglichkeit des betreffenden Gleitringes durch die Nebendichtungsanordnung nicht oder nur in wesentlich geringerem Masse beeinträchtigt wird und gleichzeitig die Montage vereinfacht ist.

Diese Aufgabe wird durch die Merkmale des Anspruchs 1 gelöst.

Die erfindungsgemäße Doppel-Dichtungsanordnung weist den Vorteil auf, dass sie auf eine in Axialrichtung den Gleitringdichtungsanordnungen nachgeordnete dritte Dichtung verzichten kann. Hierdurch kann die Doppel-Dichtungsanordnung eine sehr kurze axiale Baulänge aufweisen. Dies wird erfindungsgemäß dadurch erreicht, dass an einer zweiten Gleitringdichtungsanordnung eine Nebendichtungsanordnung an einem Kraftübertragungsring vorgesehen ist, während der axial bewegliche Gleitring selbst frei von Nuten oder dgl. zur Aufnahme von Nebendichtungselementen, wie O-Ringen, ist. Die axiale Beweglichkeit des Gleitringes wird daher durch solche Nebendichtungselemente nicht beeinträchtigt. Die Nebendichtungsanordnung ist somit in Axialrichtung einer Welle zwischen der ersten und zweiten Gleitringdichtungsanordnung vorgesehen. Am Kraftübertragungsring sind die Nebendichtungselemente, bei denen es sich vorzugsweise um O-Ringe handelt, in bestimmter Weise gehalten und angeordnet dergestalt, dass eine radiale Dichtwirkung in nennenswertem Umfang erst zustande kommt, wenn die Nebendichtungselemente unter einer axialen Kraft gesetzt werden, die eine radiale Ausdehnung der Nebendichtungselemente bewirkt. Die Nebendichtungselemente brauchen daher kein Übermaß in Bezug auf den Spalt, den sie abdichten, aufweisen, so dass der Kraftübertragungsring zusammen mit den Nebendichtungselementen ungehindert durch Reibwiderstände in Bezug auf die abzudichtende Oberfläche axial bewegt werden kann. Dies erleichtert wesentlich die Montage der Gleitringdichtungsanordnung und gewährleistet ferner, dass die radiale Abdichtung gezielt auf die Erfordernisse der jeweiligen Gleitringdichtungsanordnung abgestimmt werden kann und dennoch handelsübliche Nebendichtungselemente verwendet werden können. Ein Merkmal der Erfindung ist, dass die Nebendichtungselemente um ein geringes Maß axial vom Kraftübertragungsring vorstehen und hierdurch eine Anlage zwischen dem Kraftübertragungsring und dem Gleitring geschaffen wird, die nicht starr, sondern elastisch nachgiebig ist. Dadurch kann der Gleitring gegenüber dem Kraftübertragungsring in gewissen Grenzen eine Lageänderung vornehmen, was selbstkompensierende Wirkung auf die Konfiguration des Dichtspaltes hat, so dass dieser die gewünschte Konfiguration beibehält. Die Vorspannkraft wirkt demzufolge erfindungsgemäß über den Kraftübertragungsring und die Nebendichtungselemente auf den Gleitring und wird dabei durch die Nebendichtungselemente praktisch nicht geschwächt.

Gemäß einer Weiterbildung der Erfindung kann ferner vorgesehen sein, dass der Kraftübertragungsring von einer axialen Durchlassöffnung durchsetzt ist und andererseits eine Strömungspassage im Gleitring vorgesehen ist, die an einer dichtspaltfördernden Aussparung oder Ausnehmung in der Gleitringfläche ausmündet. Es kann dadurch über den Kraftübertragungsring ein Druckmedium zur dichtspaltfördernden Ausnehmung geführt werden, um zwischen den zusammenwirkenden Gleitringen der Gleitringpaarung vorzeitig eine Dichtspaltbildung zu bewirken. Dabei verbleibt der Kraftübertragungsring in einem gegenüber dem Druckmedium druckentlasteten Zustand. Bezüglich anderer Weiterbildungen wird auf die Ansprüche verwiesen.

Besonders bevorzugt entspricht ein Aufbau der ersten Gleitringdichtungsanordnung einem Aufbau der zweiten Gleitringdichtungsanordnung. Durch diese Maßnahme kann insbesondere eine Länge der Doppel-Dichtungsanordnung in Axialrichtung einer Welle weiter reduziert werden. Dies wird dadurch möglich, dass bei der ersten Gleitringdichtungsanordnung ebenfalls auf eine bisher im Stand der Technik verwendete zusätzliche Labyrinthdichtung verzichtet werden kann. Durch die erfindungsgemäße Tandem-Gleitringdichtungsanordnung mit zwei gleich aufgebauten Gleitringdichtungsanordnungen können im Vergleich mit dem Stand der Technik, welcher neben zwei üblich aufgebauten Gleitringdichtungsanordnungen noch eine Labyrinthdichtung zur Abdichtung gegenüber einem Produkt, und eine Schwimmdichtung zur Abdichtung gegenüber einem Lager aufweist, eine weitere axiale Verkürzung der Doppel-Dichtungsanordnung erreicht werden, ohne dass hierbei Nachteile bezüglich der Dichtungsanforderungen auftreten. Weiter kann durch die gleich aufgebauten erfindungsgemäßen Gleitringdichtungsanordnungen ein hoher Gleichteilanteil für die Doppel-Dichtungsanordnung erreicht werden.

Besonders bevorzugt sind die erfindungsgemäßen ersten und zweiten Gleitringdichtungsanordnungen rückseitig gegeneinander angeordnet (Back-to-Back-Anordnung). Weiter bevorzugt ist eine Leckageableitung dabei in Axialrichtung zwischen der ersten und zweiten Gleitringdichtungsanordnung angeordnet. Weiter bevorzugt sind die erste und zweite Gleitringdichtungsanordnung auf einem gleichen Durchmesser angeordnet.

Die erfindungsgemäße Doppel-Dichtungsanordnung wird vorzugsweise bei Gas-Kompressoren verwendet, wobei die mit der Nebendichtungsanordnung versehenen zweite Gleitringdichtungsanordnung vorzugsweise mit einem neutralen Sperrgas oder einem gereinigten Produktgas beaufschlagt wird, dessen Druck etwas über Fackeldruck des Gas-Kompressors bzw. einer Gesamtanlage, z.B. einer Raffinerieanlage, liegt. Die Nebendichtungsanordnung stellt dabei eine Abdichtung zu einem Lagerbereich der Welle bereit. Eine Leckage aus der ersten und zweiten Gleitringdichtungsanordnung wird vorzugsweise über eine gemeinsame Leckage-Abfuhrleitung abgeführt, welche in Axialrichtung zwischen der ersten und zweiten Gleitringdichtungsanordnung angeordnet ist. Auch dadurch kann eine kurze axiale Baulänge der Doppel-Dichtungsanordnung erhalten werden. Es sei angemerkt, dass die zweite Gleitringdichtungsanordnung so ausgelegt ist, dass sie bei einem Versagen der ersten Gleitringdichtungsanordnung zumindest kurzzeitig, d.h., wenigstens bis zu einem Auslaufen des Gas-Kompressors, als Sicherheitsdichtung arbeiten kann.

Ein weiterer Vorteil der erfindungsgemäßen Doppel-Dichtungsanordnung ist es, dass die Nebendichtungsanordnung verschleißfrei arbeitet, im Vergleich mit der im Stand der Technik bisher eingesetzten dritten Schwimmring-Dichtung bzw. Labyrinthdichtung. Die erfindungsgemäße Doppel-Dichtungsanordnung ist somit billiger und einfacher in der Herstellung und sicherer im Gebrauch.

Die Erfindung wird nachfolgend anhand bevorzugter Ausführungsbeispiele in Begleitung mit der Zeichnung im Detail beschrieben. In der Zeichnung ist:
- Fig. 1: eine schematische Schnittansicht einer Doppel-Dichtungsanordnung gemäß einem ersten Ausführungsbeispiel der Erfindung,
- Fig. 2: eine vergrößerte erste Teil-Ansicht einer zweiten Gleitringdichtungsanordnung der Doppel-Dichtungsanordnung von Fig. 1,
- Fig. 3: eine schematische zweite Teil-Ansicht der zweiten Gleitringdichtungsanordnung von Fig. 1, und
- Fig. 4: eine schematische Schnittansicht einer Doppel-Dichtungsanordnung gemäß einem zweiten Ausführungsbeispiel der Erfindung.

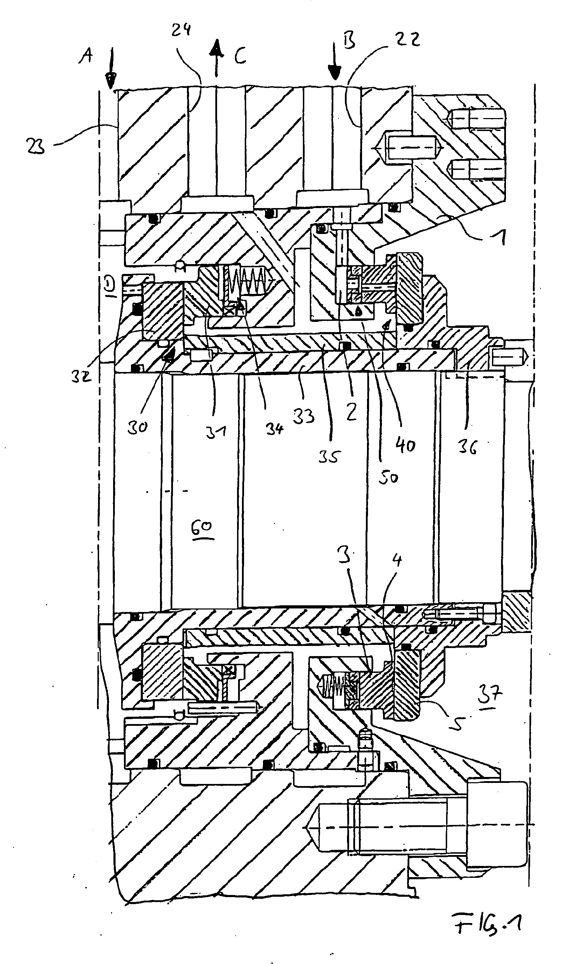

Wie aus der schematischen Ansicht des ersten Ausführungsbeispiels in Fig. 1 ersichtlich ist, umfasst eine erfindungsgemäße Doppel-Dichtungsanordnung eine erste Gleitringdichtungsanordnung 30, eine zweite Gleitringdichtungsanordnung 40 und eine Nebendichtungsanordnung 50, welche an der zweiten Gleitringdichtungsanordnung 40 angeordnet ist. Die ersten und zweiten Gleitringdichtungsanordnungen 30, 40 sind in Axialrichtung an einer Welle 60 eines Gas-Kompressors nacheinander angeordnet. Das Bezugszeichen 37 bezeichnet dabei einen Lagerraum, in welchem ein Lager (nicht dargestellt) der Welle angeordnet ist.

An der entgegengesetzten Seite des Lagerraums 37 ist ein nicht gezeigter Produktraum.

Die erste Gleitringdichtungsanordnung 30 weist einen drehfesten Gleitring 31 und einen rotierenden Gleitring 32 auf. Der rotierende Gleitring 32 ist auf einer Montagebuchse 33, welche auf der Welle 60 angeordnet ist, befestigt. Ferner umfasst die erste Gleitringdichtungsanordnung 30 eine Vorspann-Einrichtung 34, um den drehfesten Gleitring 31 in Axialrichtung vorzuspannen. Das Bezugszeichen 35 bezeichnet eine Zwischenbuchse, welche auf der Montagebuchse 33 angeordnet ist. Die Zwischenbuchse ist axial zwischen einem Ringflanschelement 36, welches mit der Montagebuchse 33 fest verbunden ist, und einem Stufenabsatz in der Montagebuchse angeordnet. Die erste Gleitringdichtungsanordnung 30 wird mit einem Sperrgas über eine Strömungspassage 23 und einen Raum D beaufschlagt. Im Betrieb wird eine Leckage über die Gleitflächen der Gleitringe 31, 32 und über eine Leckage-Abfuhr-Passage 24 abgeführt, z.B. zu einer Fackel einer Erdgasförderanlage, welche den Gas-Kompressor zur Erdgasverdichtung verwendet, was in Fig. 1 durch den Pfeil C angedeutet ist. Der Raum D wird über eine nicht gezeigte Labyrinthdichtung zum Produktraum abgedichtet.

Die zweite Gleitringdichtungsanordnung 40 ist in Axialrichtung der Welle 60 benachbart zur ersten Gleitringdichtungsanordnung 30 angeordnet. Die Leckage-Abfuhr-Passage 24 verläuft dabei zwischen der ersten und zweiten Gleitringdichtungsanordnung 30, 40 (vgl. Fig. 1).

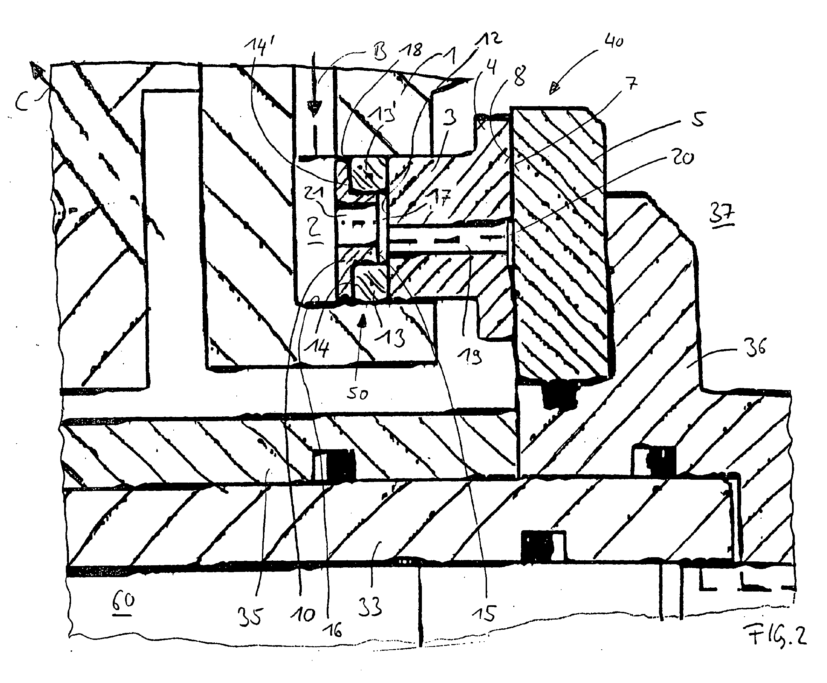

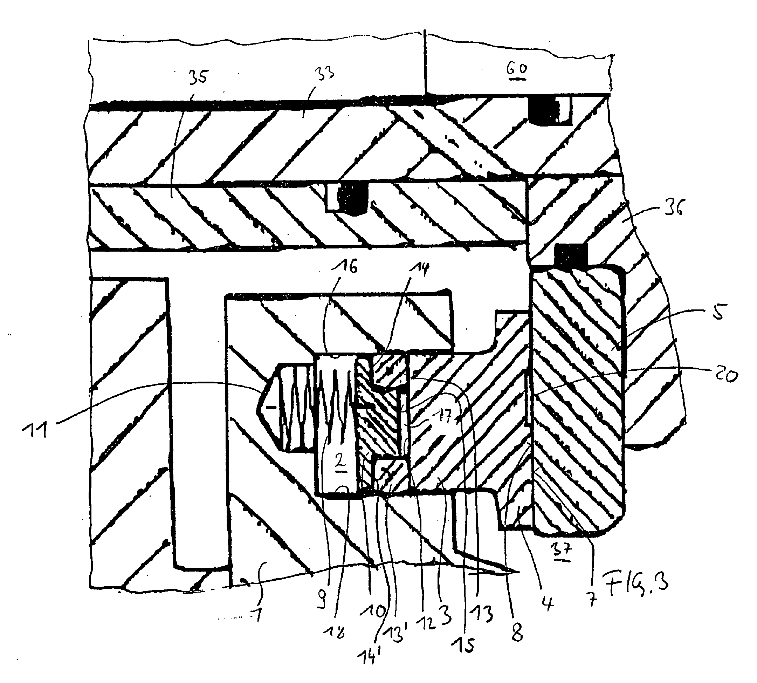

In der Zeichnung ist mit dem Bezugszeichen 1 ein stationäres Bauteil, insbesondere ein mehrteiliges Gehäuse, bezeichnet und mit dem Bezugszeichen 2 ein axial in das Gehäuse eingebrachter Führungsringraum oder eine ringförmige Ausnehmung mit einem endseitigen offenen Ende, in das ein axialer Ansatzbereich 3 eines drehfesten, jedoch axial beweglichen Gleitringes 4 der zweiten Gleitringdichtungsanordnung 40 hineinragt, so dass der Gleitring 4 im Führungsringraum 2 gehalten und axial geführt ist (vgl. Fig. 2 und 3).

Der drehfeste Gleitring 4 wirkt mit einem Gleit- oder Gegenring 5 zusammen, der zur gemeinsamen Drehung auf den Ringflansch 36 montiert ist, der auf der rotierenden Welle 60 zur gemeinsamen Drehung damit aufgesetzt und montiert werden kann. Bei einer Drehung der Welle 60 wird daher der Gleitring 5 zu einer ebensolchen Drehung veranlasst, während der Gleitring 4 durch geeignete nicht gezeigte drehsichernde Mittel drehfest in Bezug auf das Gehäuse 1 gehalten ist. Derartige Mittel sind dem Fachmann bekannt und brauchen nicht näher erläutert zu werden.

Die Gleitringe 4, 5 haben gegenüberliegende Gleit- oder Dichtflächen 7 bzw. 8, zwischen denen bei Betrieb ein Dichtspalt gebildet wird, um die Umgebung an einem Umfang gegenüber der Umgebung am anderen Umfang der Gleitringpaarung abzudichten. Bei Stillstand der Gleitringdichtungsanordnung werden die Gleitflächen 7, 8 unter einer Vorspannkraft in dichtendem Eingriff miteinander gehalten.

Dazu ist eine Vorspanneinrichtung 9 (vgl. Fig. 3), bei der es sich um eine oder mehrere umfänglich des Führungsringraums 2 verteilt angeordnete Vorspannfedern handeln kann, vorgesehen, um auf den Gleitring 4 besagte Vorspannkraft auszuüben. Die Vorspannkraft der Vorspanneinrichtung 9 wirkt auf den Gleitring 4 nicht unmittelbar, sondern über einen Kraftübertragungsring 10, der im Führungsringraum 2 axial beweglich angeordnet ist. Die Vorspanneinrichtung 9 ist mit einem Ende am Kraftübertragungsring 10 und am anderen Ende am Gehäuse 1, vorzugsweise am Boden von im Gehäuse 1 vorgesehener Sacklochbohrungen 11 abgestützt. Unter der Wirkung der Vorspannkraft erfährt der Kraftübertragungsring 10 eine axiale Bewegung im Führungsringraum 2 in Richtung auf eine benachbarte Stirnseite 12 des Gleitringes 4, so dass auf diesen die Vorspannkraft übertragen wird.

Erfindungsgemäß weist der Kraftübertragungsring 10 ein Paar Dichtungselemente 13, 13' aus einem elastischen Material wie einem Elastomermaterial auf, die dazu dienen, den Gleitring 4 gegenüber dem Gehäuse 1 abzudichten. Vorzugsweise handelt es sich bei den Dichtungselementen 13, 13' um handelsüblich erhältliche O-Ringe, die in umfänglich sich erstreckenden Aussparungen 14, 14' mit einem an die Querschnittkonfiguration der Dichtungselemente 13, 13' angepassten, z.B. teilkreisförmigem oder rechteckigem, Querschnitt im Eckbereich zwischen dem äußeren bzw. inneren Umfang und einer dem Gleitring 4 zugewandten Endfläche 15 des Kraftübertragungsringes 10 so angeordnet sind, dass der Querschnitt jedes Dichtungselementes 13, 13' die Endfläche 15 um ein geeignetes geringes Maß von z.B. ca. 0,5 bis 1 mm bei einer Querschnittsabmessung von 3,5 bis 7,0 mm axial überragt. Vorzugsweise überragen die Dichtungselemente 13, 13' auch den äußeren bzw. inneren Umfang des Kraftübertragungsringes 10 um ein geringes Maß.

Vorzugsweise haben die Dichtungselementes 13, 13' gleiche Querschnittsabmessungen und liegen ihre Querschnittsmittelpunkte auf einer gemeinsamen radialen Ebene in einer koaxialen Anordnung.

Die Dichtungselemente 13, 13' können mit benachbarten inneren bzw. äußeren Umfangsflächen 16, 18 des Führungsringraumes 2 in Eingriff treten, wenn die Dichtungselemente 13, 13' infolge einer darauf ausgeübten Axialkraft eine radiale Ausdehnung erfahren. Ohne diese Axialkraft liegt dagegen keine oder eine nur vernachlässigbar geringe Eingriffnahme der Dichtungselemente 13, 13' mit den Umfangsflächen 16, 18 vor, so dass unter diesen Umständen die axiale Beweglichkeit des Kraftübertragungsringes 10 nicht beeinträchtigt ist.

Wenn der Kraftübertragungsring 10 mit den Dichtungselementen 13, 13' unter der von der Vorspanneinrichtung 9 ausgeübten Vorspannkraft gegen die benachbarte Stirnseite 12 des Gleitringes 4 gedrückt wird, bewirkt dies die Bildung eines Spaltraumes 17 zwischen dem Kraftübertragungsring 10 und der Stirnseite 12 des Gleitringes 4, der außen- und innenumfänglich durch die Dichtungselemente 13, 13' begrenzt und abgedichtet ist. Ferner bewirkt die Axialkraft auf die Dichtungselemente 13, 13', dass diese eine radiale Ausdehnung erfahren und dadurch in dichtendem Eingriff mit den Umfangsflächen 16, 18 des Führungsringraumes 12 treten, um den Gleitring 4 gegenüber dem Gehäuse 1 abzudichten.

Die Erfindung ermöglicht damit das Einsetzen des Kraftübertragungsringes 10 in den Führungsringraum 2 ohne Reibwiderstand seitens der Dichtungselemente 13, 13'. Ferner hat die axiale Eingriffnahme zwischen dem Kraftübertragungsring 10 und dem Gleitring 4 über die Dichtungselemente 13, 13' zur Folge, dass die Eingriffnahme nicht starr, sondern nachgiebig ist und daher Lageabweichungen zwischen dem Gleitring 4 und Kraftübertragungsring 10 kompensiert werden können.

Wie weiter in Fig. 2 gezeigt ist, ist der drehfeste Gleitring 4 axial von einer Strömungspassage 19 durchsetzt, die einerends an der Stirnfläche 12 ausmündet und anderenends in eine ringförmige Ausnehmung 20 mit geeigneter geringer Tiefe, die in der Gleitfläche 7 des Gleitringes 4 eingebracht ist. Wenn erwünscht, können auch mehrere derartige Strömungspassagen 19 vorgesehen sein. Über jede Strömungspassage 19 kann in die ringförmige Ausnehmung 20 ein Druckmedium, z.B. ein Gas, insbesondere Luft, eingeführt werden, um die Dichtspaltbildung zwischen den Gleitflächen 7, 8 zu bewirken bzw. fördern. Der Kraftübertragungsring 10 ist von einer Passage 21 durchsetzt, die einerends innerhalb des von den Dichtungselementen 13, 13' umgrenzten Bereiches der Endfläche 15 ausmündet und anderenends in den Führungsringraum 2, in den anderseits eine im Gehäuse 1 vorgesehene Strömungspassage 22 einmündet. Wenn erwünscht, können auch mehrere derartige Strömungspassagen 22 vorgesehen sein. Ein in die oder jede Strömungspassage 22, wie durch den Pfeil B angedeutet, eingeführtes Strömungsmedium kann daher über den Führungsringraum 2, die Passage 21 im Kraftübertragungsring 10, den Spaltraum 17 und die Strömungspassage 19 zur Ausnehmung 20 in der Gleitfläche 7 des Gleitringes 4 gelangen. Eine Leckage wird dann über die Leckage-Abfuhr-Passage 24 zu einer Fackel abgeführt. Die zweite Gleitringdichtungsanordnung 40 wird dabei über die Strömungspassage 22 und den Führungsringraum 2 mit einem Druck etwas über dem Fackeldruck beaufschlagt. Die Ausnehmung 20 unterteilt dabei den Dichtspalt zwischen dem Gleitring 4, 5 in einen radial inneren und einen radial äußeren Dichtbereich, wobei der radial äußere Dichtbereich die Abdichtung zum Lagerraum 37 übernimmt. Die zweite Gleitringdichtungsanordnung ist somit mit zwei koaxialen Dichtbereichen ausgebildet.

Bei der voraus beschriebenen bevorzugten Ausführungsform der Erfindung weist der Kraftübertragungsring 10 der zweiten Gleitringdichtungsanordnung ein Paar Dichtungselemente 13, 13' auf, die in der erfindungsgemäßen Weise nahe dem inneren bzw. äußeren Umfang des Kraftübertragungsringes 10 angeordnet sind. Wenn erwünscht, könnte auch nur ein derartiges Dichtungselement am Kraftübertragungsring in der erfindungsgemäßen Weise angeordnet sein, so dass eine Abdichtung gegenüber nur einer Führungsumfangsfläche geschaffen würde, während eine Abdichtung gegenüber der anderen Führungsumfangsfläche auf andere Weise erfolgen könnte, sofern nicht auf eine derartige Abdichtung gänzlich verzichtet würde. Es versteht sich ferner, dass auf die beschriebenen Maßnahmen zur Zufuhr eines Strömungsmediums zu der in der Gleitfläche des drehfesten Gleitringes 4 vorgesehenen Ausnehmung 20 verzichtet werden kann, insbesondere wenn die Dichtspaltbildung durch andere geeignete Maßnahmen, z.B. förderwirksame Ausnehmungen in der Dichtfläche, erhalten bzw. gefördert würde, wie diese z.B. in Burgmann, Gas Seals, Selbstverlag 1997, Seite 17 näher beschrieben sind.

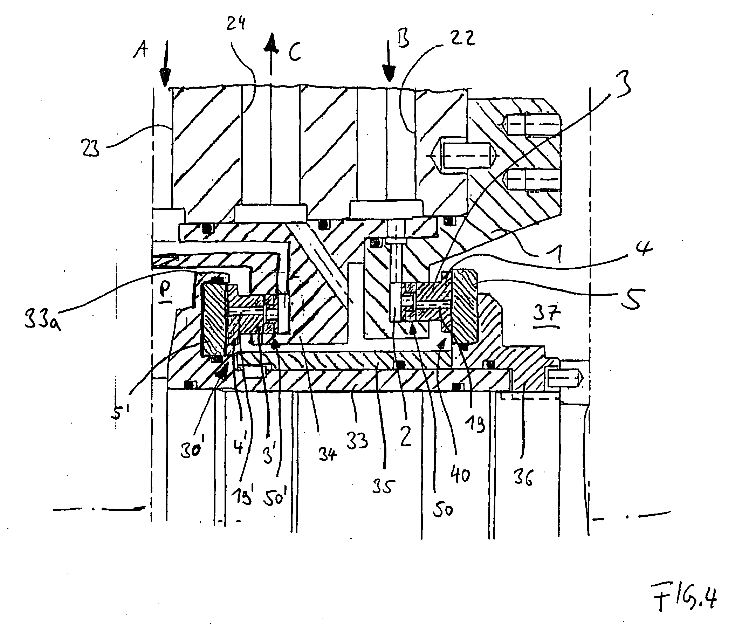

Nachfolgend wird unter Bezugnahme auf Fig. 4 eine Doppel-Dichtungsanordnung gemäß einem zweiten Ausführungsbeispiel der Erfindung im Detail beschrieben, wobei gleiche bzw. funktional gleiche Teile mit den gleichen Bezugszeichen wie im ersten Ausführungsbeispiel bezeichnet sind.

Wie aus Fig. 4 ersichtlich ist, ist bei der Doppel-Dichtungsanordnung des zweiten Ausführungsbeispiels die erste Gleitringdichtungsanordnung 30' gleich wie die zweite Gleitringdichtungsanordnung 40 aufgebaut. Wie aus Fig. 4 ersichtlich ist, sind die erste und zweite Gleitringdichtungsanordnung 30', 40 dabei rückseitig gegeneinander angeordnet. Wie die zweite Gleitringdichtungsanordnung 40, weist die erste Gleitringdichtungsanordnung 30' einen drehfesten Gleitring 4', einen axialen Ansatzbereich 3' und einen rotierenden Gleitring 5' auf. Zwischen den Gleitringen 4', 5' wird in gleicher Weise wie bei der zweiten Gleitringdichtungsanordnung 40 im Betrieb ein Dichtspalt gebildet, um einen Produktraum P abzudichten. Hierzu wird ein Druckmedium, insbesondere Luft, wie durch den Pfeil A angedeutet, über die Strömungspassage 23 und die Strömungspassage 19' zugeführt. Der rotierende Gleitring 5' wird ferner mittels eines Haltekragens 33a auf der Montagebuchse 33 fixiert. Somit dichtet die erste Gleitringdichtungsanordnung 30' unmittelbar den Produktraum P ab, so dass auf eine bisher im Stand der Technik verwendete zusätzliche Labyrinthdichtung verzichtet werden kann. Dadurch wird die Doppel-Dichtungsanordnung gemäß dem zweiten Ausführungsbeispiel in Axialrichtung noch kompakter, so dass sie, wie in Fig. 4 gezeigt, die im Stand der Technik verwendeten vier Dichtungen durch zwei erfindungsgemäße Gleitringdichtungsanordnungen 30', 40 ersetzen kann. Die rückseitig gegeneinander gerichtete Ausrichtung der ersten und zweiten Gleitringdichtungsanordnung 30', 40 ermöglicht es ferner, dass lediglich eine Leckage-Abfuhr-Passage 24 vorgesehen ist. Die Leckage-Abfuhr-Passage 24 ist dabei in Axialrichtung zwischen der ersten Gleitringdichtungsanordnung 30' und der zweiten Gleitringdichtungsanordnung 40 angeordnet. Da beide Gleitringdichtungsanordnungen 30', 40 gleich aufgebaut und lediglich gegenläufig montiert sind, kann eine große Gleichteileanzahl für die Doppel-Dichtungsanordnung erhalten werden. Das über die Strömungspassage 23 zugeführte Abdichtungsgas weist einen Druck auf, welcher etwas über dem Produktdruck des Produkts im Raum P liegt. Hierdurch strömt das Abdichtungsgas im Dichtspalt zwischen den Gleitringen 4', 5' radial nach außen bzw. radial nach innen und stellt somit sicher, dass die Gleitringdichtung die Abdichtung des Produktraums P ermöglicht. Die erfindungsgemäße Tandem-Anordnung der gleich aufgebauten Gleitringdichtungsanordnung 30', 40 ermöglicht somit insbesondere im Kompressorenbau eine sehr kurze axiale Baulänge, was sich bei den großen Wellenlängen im Kompressorenbau sehr positiv, insbesondere auf die Gleichlaufeigenschaften der Wellen und Auswuchtungsvorgänge, auswirkt. Ansonsten ist die erste Gleitringdichtungsanordnung 30' des zweiten Ausführungsbeispiels wie die unter Bezugnahme auf die Fig. 1-3 beschriebene zweite Gleitringdichtungsanordnung 40 aufgebaut, so dass auf die dort gegebene Beschreibung verwiesen werden kann.

Somit kann erfindungsgemäß eine Doppel-Dichtungsanordnung mit einer ersten und zweiten Gleitringdichtungsanordnung 30, 40 bereitgestellt werden, welche in Axialrichtung einer Welle nur eine geringe Baulänge aufweist. Die Nebendichtungsanordnung 50 ist dabei unmittelbar an der zweiten Gleitringdichtungsanordnung 40 angeordnet, ohne dass hierfür Nuten o.ä. an einem der Gleitringe vorgesehen werden müssen. Die erfindungsgemäße Doppel-Dichtungsanordnung übernimmt somit die Funktion, welche bisher von drei separaten, in Axialrichtung nacheinander angeordneten Dichtungen, nämlich zweier Gleitringdichtungsanordnungen und einer Schwimmring-Dichtung übernommen wurde. Hier ist die erfindungsgemäße Doppel-Dichtungsanordnung besonders vorteilhaft, da im Kompressorbau um jeden Millimeter, den man am Abstand der Wellenlager einsparen kann, gerungen wird. Dabei ist die erfindungsgemäße Lösung wesentlich einfacher, billiger und auch betriebssicherer als die bisher im Stand der Technik verwendeten Lösungen.

## Patentansprüche

1. Doppel-Dichtungsanordnung, insbesondere zur Abdichtung an einem GasKompressor, umfassend
- eine erste Gleitringdichtungsanordnung (30) mit einem Paar zusammenwirkender Gleitringe (31, 32), von denen einer zur gemeinsamen Drehung mit einem rotierenden Bauteil (60) und der andere drehfest an einem stationären Bauteil (1) vorgesehen ist,
- eine zweite Gleitringdichtungsanordnung (40) mit wenigstens einem Paar zusammenwirkender Gleitringe (4,5), von denen einer zur gemeinsamen Drehung mit dem rotierenden Bauteil (60) und der andere drehfest an dem stationären Bauteil (1) vorgesehen ist, wobei einer der Gleitringe (4) axial beweglich und mit einer Vorspannkraft gegen den betreffenden anderen Gleitring (5) axial vorgespannt ist, wobei die Vorspannkraft über einen Kraftübertragungsring (10) auf den betreffenden Gleitring (4) übertragbar ist, um einander zuweisende Gleitflächen (7,8) der Gleitringe (4, 5), zwischen denen bei Betrieb ein Dichtspalt gebildet ist, in dichtendem Eingriff miteinander vorzuspannen, wobei die zweite Gleitringdichtungsanordnung (40) ein Paar koaxiale Führungsumfangsflächen (16, 18) aufweist, die zwischen sich einen Führungsringraum (2) begrenzen, in dem der Kraftübertragungsring (10) und wenigstens ein axialer Bereich (3) des Gleitringes (4) aufgenommen sind, und mit einer Nebendichtungsanordnung (50) zur Abdichtung des axial beweglichen Gleitringes (4) gegenüber den die Bewegung des Gleitringes (4) und des Kraftübertragungsringes (10) führenden Führungsumfangsflächen (16, 18), wobei der axial bewegliche Gleitring (4) frei von Nuten oder dergleichen zur Aufnahme von Nebendichtungselementen ist, und wobei die Nebendichtungsanordnung (50) am Kraftübertragungsring (10) vorgesehen ist und wenigstens ein ringförmiges Dichtungselement (13, 13') aus einem elastischen Material umfasst, das am Kraftübertragungsring (10) nahe seinem Umfang und dessen dem Gleitring (4) zugewandten Endfläche (15) so gehalten ist, dass es den Kraftübertragungsring (10) wenigstens axial überragt und unter der Wirkung der Vorspannkraft radial über den Umfang der Endfläche (15) hinaus formbar ist, und in dichtendem Eingriff gleichzeitig mit dem Gleitring (4) und der Führungsumfangsfläche (16, 18) bringbar ist, **dadurch gekennzeichnet, dass** ohne Einwirken der Vorspannkraft ein derartiger Eingriff im wesentlichen verhindert ist, wobei die Nebendichtungsanordnung (50) ein Paar Dichtungselemente (13, 13') umfasst, von denen eines nahe dem inneren Umfang und das andere nahe dem äußeren Umfang des Kraftübertragungsringes (10) der dem Gleitring (4) zugewandten Endfläche (15) gehalten ist, wobei das eine der Dichtungselemente (13) mit einer der Führungsumfangsflächen (16) und das andere (13') mit der anderen Führungsumfangsfläche (18) in dichtendem Eingriff bringbar ist, während die Dichtungselemente (13, 13') gleichzeitig an der dem Gleitring (4) zugewandten Endfläche (15) einen axialen Spaltraumbereich (17) umfänglich begrenzen.

2. Doppel-Dichtungsanordnung nach Anspruch 1, **dadurch gekennzeichnet, dass** die Dichtungselemente (13, 13') im wesentlichen gleiche Querschnittsabmessungen haben, wobei die Querschnittsmittelpunkte der Dichtungselemente auf einer im wesentlichen gemeinsamen radialen Ebene angeordnet sind.

3. Doppel-Dichtungsanordnung nach Anspruch 1 oder 2, **dadurch gekennzeichnet, dass** der Kraftübertragungsring (10) von mindestens einer axialen Durchlassöffnung (21) durchsetzt ist, wobei die Durchlassöffnung (21) einerends innerhalb des Spaltraumbereiches (17) ausmündet.

4. Doppel-Dichtungsanordnung nach Anspruch 3, **gekennzeichnet durch** mindestens eine Strömungspassage (19) im Gleitring (4), die einerends an dessen dem Kraftübertragungsring (10) zugewandten Stirnfläche (12) in Ausrichtung zum axialen Spaltraumbereich (17) und anderends an dessen Gleitfläche (7) ausmündet, um ein eine Dichtspaltbildung förderndes Strömungsmedium zwischen die zusammenwirkenden Gleitflächen (7, 8) zu führen.

5. Doppel-Dichtungsanordnung nach einem der vorhergehenden Ansprüche, **dadurch gekennzeichnet, dass** jedes Dichtungselement (13, 13') als O-Ring ausgebildet ist.

6. Doppel-Dichtungsanordnung nach einem der vorhergehenden Ansprüche, **dadurch gekennzeichnet, dass** der drehfeste Gleitring (4) der zweiten Gleitringdichtungsanordnung axial beweglich ist.

7. Doppel-Dichtungsanordnung nach einem der vorhergehenden Ansprüche, **dadurch gekennzeichnet, dass** eine Federvorspanneinrichtung (9) zum Aufbringen der Vorspannkraft an der zweiten Gleitringdichtungsanordnung vorgesehen ist.

8. Doppel-Dichtungsanordnung nach einem der vorhergehenden Ansprüche, ferner umfassend eine Leckage-Abfuhr-Passage (24), welche in Axialrichtung zwischen der ersten Gleitringdichtungsanordnung (30) und der zweiten Gleitringdichtungsanordnung (40) angeordnet ist.

9. Doppel-Dichtungsanordnung nach einem der vorhergehenden Ansprüche, **dadurch gekennzeichnet, dass** die erste Gleitringdichtungsanordnung (30') und die zweite Gleitringdichtungsanordnung (40) gleich ausgebildet sind.

10. Doppel-Dichtungsanordnung nach Anspruch 9, **dadurch gekennzeichnet, dass** die erste und zweite Gleitringdichtungsanordnung (30', 40) rückseitig gegeneinander angeordnet sind.

## Claims

1. A dual seal assembly, in particular for sealing a gas compressor, comprising
- a first mechanical seal assembly (30) including a pair of co-operating seal rings (31, 32), one of which is provided for common rotation with a rotating component (60) and the other of which is provided rotationally fixed at a stationary component (1),
- a second mechanical seal assembly (40) including at least one pair of co-operating seal rings (4, 5), one of which is provided for common rotation with the rotating component (60) and the other of which is provided rotationally fixed at the stationary component (1), one of the seal rings (4) being axially movable and axially biased with a biasing force against the respectively other seal ring (5), said biasing force being transmittable through a force transmitting ring (10) to the respective seal ring (4), in order to bias mutually facing sliding surfaces (7, 8) of the seal rings (4, 5), between which a sealing gap is formed during operation, in a mutual sealing engagement, the second mechanical seal assembly (40) comprising a pair of coaxial circumferential guiding surfaces (16, 18) which delimit a guiding ring space (2) between them, in which the force transmitting ring (10) and at least an axial portion (3) of the seal ring (4) is received, and a secondary sealing assembly (50) for sealing the axially movable seal ring (4) with respect to the circumferential guiding surfaces (16, 18) guiding the movement of the seal ring (4) and the force transmitting ring (10), the axially movable seal ring (4) being devoid of any grooves, or the like, for receiving secondary sealing members, and the secondary sealing assembly (50) being provided at the force transmitting ring (10) and comprising at least one annular sealing member (13, 13') made of an elastic material, said member being retained at the force transmitting ring (10) near its periphery and its end face (15) facing the seal ring (4) such that it protrudes beyond the force transmitting ring (10) at least axially and is moldable radially beyond the periphery of the end face (15) due to the effect of the biasing force and is configured to sealingly engage simultaneously with the seal ring (4) and the circumferential guiding surface (16, 18), **characterized in that** such engagement is substantially prevented when no biasing force is effective, wherein the secondary sealing assembly (50) comprises a pair of sealing members (13, 13'), one of which is retained near the inner periphery and the other of which is retained near the outer periphery of the force transmitting ring (10) of the end face (15) facing the seal ring (4), wherein the one sealing member (13) is configured to sealingly engage with one of the circumferential guiding surfaces (16) and the other sealing member (13') is configured to sealingly engage with the other circumferential guiding surface (18), while the sealing members (13, 13') simultaneously delimit an axial gap space region (17) circumferentially at the end face (15) facing the seal ring (4).

2. The dual seal assembly of claim 2, **characterized in that** the sealing members (13, 13') substantially have the same cross-sectional dimensions, wherein the cross-sectional centers of the sealing members are arranged on a substantially common radial plane.

3. The dual seal assembly of claim 1 or 2, **characterized in that** the force transmitting ring (10) is interspersed with at least one axial aperture (21), wherein the aperture (21) at one end opens out within the gap space region (17).

4. The dual seal assembly of claim 3, **characterized by** at least one flow passage (19) in the seal ring (4), which at one end opens out at the face end (12) thereof facing the force transmitting ring (10) in alignment with the axial gap space region (17) and at the other end opens out into the sliding surface (7) thereof, in order to supply a flow medium promoting the sealing gap formation between the co-operating sliding surfaces (7, 8).

5. The dual seal assembly of any of the preceding claims, **characterized in that** each sealing member (13, 13') is formed as an O-ring.

6. The dual seal assembly of any of the preceding claims, **characterized in that** the rotationally fixed seal ring (4) of the second mechanical seal assembly is axially movable.

7. The dual seal assembly of any of the preceding claims, **characterized in that** a spring biasing device (9) for applying the biasing force is provided at the second mechanical seal assembly.

8. The dual seal assembly of any of the preceding claims, further comprising a leakage drain passage (24) which is arranged in the axial direction between the first mechanical seal assembly (30) and the second mechanical seal assembly (40).

9. The dual seal assembly of any of the preceding claims, **characterized in that** the first mechanical seal assembly (30') and the second mechanical seal assembly (40) are identically constructed.

10. The dual seal assembly of claim 9, **characterized in that** the first and the second mechanical seal assemblies (30', 40) are arranged back-to-back.

## Revendications

1. Arrangement d'étanchéité double, en particulier pour l'étanchéité d'un compresseur de gaz, comprenant
- une première garniture mécanique d'étanchéité (30) avec une paire d'anneaux glissants (31, 32) qui coopèrent, dont un est prévu pour tourner en commun avec un composant rotatif (60) et l'autre est bloqué en rotation sur un composant stationnaire (1),
- une deuxième garniture mécanique d'étanchéité (40) avec au moins une paire d'anneaux glissants (4, 5) qui coopèrent, dont un est prévu pour tourner en commun avec le composant rotatif (60) et l'autre est bloqué en rotation sur le composant stationnaire (1), un des anneaux glissants (4) étant mobile axialement et précontraint axialement avec une force de précontrainte contre l'autre anneau glissant concerné (5), la force de précontrainte pouvant être transmise à l'anneau glissant concerné (4) par un anneau de transmission de force (10) pour précontraindre ensemble en engagement étanche des surfaces de glissement (7, 8) tournées l'une vers l'autre des anneaux glissants (4, 5) entre lesquelles une fente d'étanchéité est formée en fonctionnement, la deuxième garniture mécanique d'étanchéité (40) présentant une paire de surfaces circonférentielles de guidage (16, 18) coaxiales qui limitent entre elles un espace annulaire de guidage (2) dans lequel l'anneau de transmission de force (10) et au moins une zone axiale (3) de l'anneau glissant (4) sont reçus, et avec un arrangement d'étanchéité secondaire (50) pour rendre étanche l'anneau glissant mobile axialement (4) par rapport aux surfaces circonférentielles de guidage (16, 18) qui guident le mouvement de l'anneau glissant (4) et de l'anneau de transmission de force (10), l'anneau glissant mobile axialement (4) étant dépourvu de rainures ou analogues pour la réception d'éléments d'étanchéité secondaires, et l'arrangement d'étanchéité secondaire (50) étant prévu sur l'anneau de transmission de force (10) et comprenant au moins un élément d'étanchéité annulaire (13, 13') en matériau élastique, qui est maintenu sur l'anneau de transmission de force (10) près de sa circonférence et de sa surface d'extrémité (15) tournée vers l'anneau glissant (4) de telle façon qu'il dépasse de l'anneau de transmission de force (10) au moins axialement et qu'il soit déformable radialement au-delà de la circonférence de la surface d'extrémité (15) sous l'action de la force de précontrainte et puisse être mis en engagement étanche en même temps avec l'anneau glissant (4) et la surface circonférentielle de guidage (16, 18), **caractérisé en ce que**, sans action de la force de précontrainte un tel engagement est essentiellement empêché, l'arrangement d'étanchéité secondaire (50) comprenant une paire d'éléments d'étanchéité (13, 13') dont un est maintenu près de la circonférence intérieure et l'autre près de la circonférence extérieure de l'anneau de transmission de force (10) de la surface d'extrémité (15) tournée vers l'anneau glissant (4), un des éléments d'étanchéité (13) pouvant être mis en engagement étanche avec une des surfaces circonférentielles de guidage (16) et l'autre (13') avec l'autre surface circonférentielle de guidage (18), tandis que les éléments d'étanchéité (13, 13') limitent en même temps circonférentiellement une zone d'espace interstitiel (17) sur la surface d'extrémité (15) tournée vers l'anneau glissant (4).

2. Arrangement d'étanchéité double selon la revendication 1, **caractérisé en ce que** les éléments d'étanchéité (13, 13') ont essentiellement les mêmes dimensions en coupe transversale, les centres de coupe transversale des éléments d'étanchéité étant disposés sur un plan radial essentiellement commun.

3. Arrangement d'étanchéité double selon la revendication 1 ou 2, **caractérisé en ce que** l'anneau de transmission de force (10) est traversé par au moins une ouverture de passage axiale (21), laquelle ouverture de passage (21) débouche à une extrémité à l'intérieur de la zone d'espace interstitiel (17).

4. Arrangement d'étanchéité double selon la revendication 3, **caractérisé par** au moins un passage d'écoulement (19) dans l'anneau glissant (4), qui débouche à une extrémité à sa surface frontale (12) tournée vers l'anneau de transmission de force (10) en alignement avec la zone d'espace interstitiel (17) axiale et à l'autre extrémité à sa surface de glissement (7), pour guider un milieu d'écoulement favorisant une formation de fente d'étanchéité entre les surfaces de glissement (7, 8) qui coopèrent.

5. Arrangement d'étanchéité double selon une des revendications précédentes, **caractérisé en ce que** chaque élément d'étanchéité (13, 13') est réalisé sous la forme d'un joint torique.

6. Arrangement d'étanchéité double selon une des revendications précédentes, **caractérisé en ce que** l'anneau glissant (4) bloqué en rotation de la deuxième garniture mécanique d'étanchéité est mobile axialement.

7. Arrangement d'étanchéité double selon une des revendications précédentes, **caractérisé en ce qu'**un dispositif de précontrainte à ressort (9) est prévu pour appliquer la force de précontrainte sur la deuxième garniture mécanique d'étanchéité.

8. Arrangement d'étanchéité double selon une des revendications précédentes, comprenant en outre un passage d'évacuation de fuite (24) qui est disposé en direction axiale entre la première garniture mécanique d'étanchéité (30) et la deuxième garniture mécanique d'étanchéité (40).

9. Arrangement d'étanchéité double selon une des revendications précédentes, **caractérisé en ce que** la première garniture mécanique d'étanchéité (30') et la deuxième garniture mécanique d'étanchéité (40) sont réalisées de façon identique.

10. Arrangement d'étanchéité double selon la revendication 9, **caractérisé en ce que** la première et la deuxième garniture mécanique d'étanchéité (30', 40) sont disposées dos à dos.
